Europäisches Patentamt

(19) European Patent Office

Office européen des brevets

(11) Publication number : **0 459 726 A2**

# (12) EUROPEAN PATENT APPLICATION

(21) Application number : **91304743.7**

(51) Int. Cl.⁵ : **G11B 20/12**

(22) Date of filing : **24.05.91**

(30) Priority : **28.05.90 JP 135507/90**

(43) Date of publication of application :
**04.12.91 Bulletin 91/49**

(84) Designated Contracting States :
**DE FR GB**

(72) Inventor : **Nakagawa, Yuzo**
**26-48-504, Takamura**
**Hiratsuka-shi, Kanagawa-ken (JP)**

(74) Representative : **Moss, Robert Douglas**
**IBM United Kingdom Limited Intellectual**
**Property Department Hursley Park**
**Winchester Hampshire SO21 2JN (GB)**

(71) Applicant : **International Business Machines**
**Corporation**
**Old Orchard Road**
**Armonk, N.Y. 10504 (US)**

(54) **Magnetic disk apparatus.**

(57)  Described is a magnetic disk apparatus which includes at least one data recording disk, the recording surface of which is divided into a plurality of concentric zones including an innermost and an outermost zone, each zone comprising a plurality of data tracks. The disk surface also includes servo information recorded in equally angularly spaced segments extending contiguously across the zones. The data is recorded in sectors having a predetermined amount of data, the sectors being bounded within a track by circumferentially adjacent servo segments. The number of sectors in the outermost zone is greater than the number in the innermost zone resulting in an overall increase in disk storage capacity.

EP 0 459 726 A2

FIG. 1

Technical Field of the Invention

The invention relates to a magnetic disk apparatus employing a zone recording system.

Background of the Invention

A variety of information processing devices such as personal computers and word processors make use of magnetic disk drives and there is an ongoing requirement to develop smaller drives with larger storage capacities.

A magnetic disk has a plurality of concentric tracks, for the storage of data, which are accessed by a magnetic head to read or write the data from or to the tracks. During reading and writing operations, it is necessary to accurately position the magnetic head with respect to the desired track. Servo positioning mechanisms are commonly used in disk drives which have a high track density and two common methods of providing the necessary servo information have been employed. In one, the servo information is recorded on a delicated disk surface which is read by a dedicated servo head. In the second, servo information is embedded in sectors on the same disk used to record the read/write data.

Normally, the magnetic disk apparatus sets the data transfer rate to the maximum possible frequency to read and write data from and to the innermost track. Because the disk rotation speed increases towards the outermost track, the number of bits of date per unit length recorded on the disk is less at the outer track than the inner track. There is thus a less efficient use of disk surface at the outer edge of the disk.

In magnetic disk apparatus employing a dedicated servo disk surface or a stepper motor positioning system (used in apparatus with relatively low track density), the whole of the data disk surface is available for customer data.

In order to increase the recording density at the outer portion of the disk, there has been a trend toward using a zone recording method in which the disk is divided into a number of concentric zones containing a plurality of tracks. Typically there are two zones, one inner and one outer and the number of sectors per track in the outer zone is greater than the number in the inner zone. The recording frequency used to record data in the outer zone is higher than for the inner zone. Two distinct data transfer rates are employed for the two zones.

For example, one such method that records more bytes in the outer track than in the inner track, and switches sampling signal servo information on the outer and inner tracks is described in Japanese patent application JP 59-116911.

In apparatus using the dedicated servo technique, the change in the number of sectors from one zone to the next has no effect on the head positioning servo system. However, in disk apparatus using the embedded sector servo technique in which a servo irformation recording area is provided every predetermined data blok, a change in the sampling frequency from one zone to another has detrimental effect on the head positioning servo system.

Disclosure of the Invention

The invention seeks to provide a magnetic disk apparatus including at least one data recording disk, the recording surface of which is divided into:

a plurality of concentric zones including an innermost and an outermost zone, each zone comprising a plurality of data tracks;

a plurality of fields containing servo information for use in positioning a head of the apparatus over the tracks, the fields extending contiguously across said zones and defining a data recording sector in each track between circumferentially adjacent fields;

each sector comprising a plurality of blocks, each of which contains a predetermined amount of data, and the number of blocks per sector being fixed within a zone and increasing from said innermost to said outermost zone.

Thus in the magnetic disk apparatus of the present invention there is an increase in the number of data sectors in the outer track with the resultant increase in total recording capacity of the disk without the need to alter the sampling frequency for reading out the servo information.

Preferred embodiments of the invention will now be described, by way of example only, with reference to the accompanying drawings.

Brief Description of the Drawings

Fig. 1 shows a magnetic disk with a 2 zone recording system employed in one embodiment of the invention;

Fig. 2 shows a magnetic disk with a 3 zone recording system employed in a second embodiment of the ivention;

Fig. 3 is a schematic block diagram of the signal processing apparatus for performing read/write operations in a magnetic disk apparatus according to the present invention.

Detailed Description of the Invention

At present, 3.5 inch or 5 inch magnetic disk drives commonly use 512 bytes as the minimum read/write unit, and many magnetic disk drives format each sector for 512 bytes. Im magnetic disk drives employing the embedded servo technique, a sector is generally a unit of 512 bytes, and each sector includes an embedded servo information pattern as head positioning information, which is read out by the magnetic head and used to perform head positioning.

In this invention, the user management unit, 512 bytes, divided by an integral number N is defined as the internal management unit number. Zone recording is performed by changing, from the inner zone to the outer zone, the number of internal management units recorded in each sector.

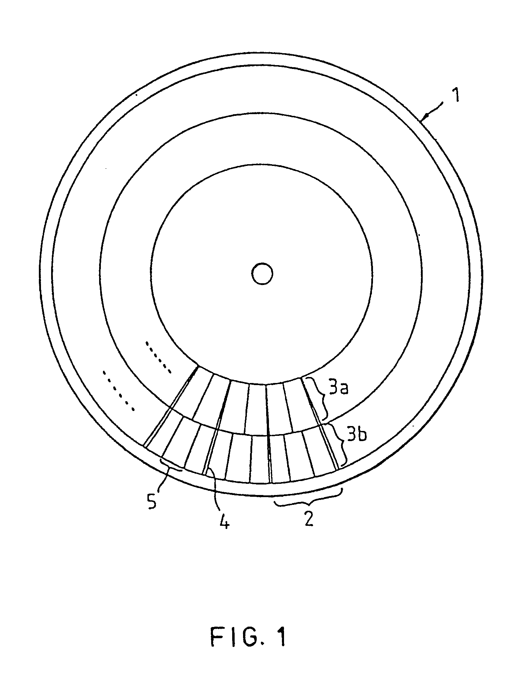

Fig. 1 is one embodiment of the invention and shows a magnetic disk including a 2 zone recording system. In the figure, reference number 1 is a magnetic disk 1, reference number 2 is the data recording area for recording data to magnetic disk 1, reference numbers 3a and 3b are zones 0 and 1 respectively, each zone being composed of a plurality of tracks. Reference number 4 denotes a servo information recording area in which is recorded the servo information pattern for head positioning, and reference number 5 is a data sector comprising an amount of data corresponding to the predefined internal management nit. In the 2 zone ( 2 : 3 division ) recording method, the integral N is equal to 2 which gives a value for the internal management unit of 512 / 2 = 256 bytes. In the inner zone 0, each sector is made up of 2 internal management units (256 * 2 = 512 bytes), and in the outer zone 1, each sector comprises 3 units (256 * 3 = 768 bytes). The recording density of zone 1is thus 1.5 times that of zone 0 which gives a 25 % total increase in storage capacity.

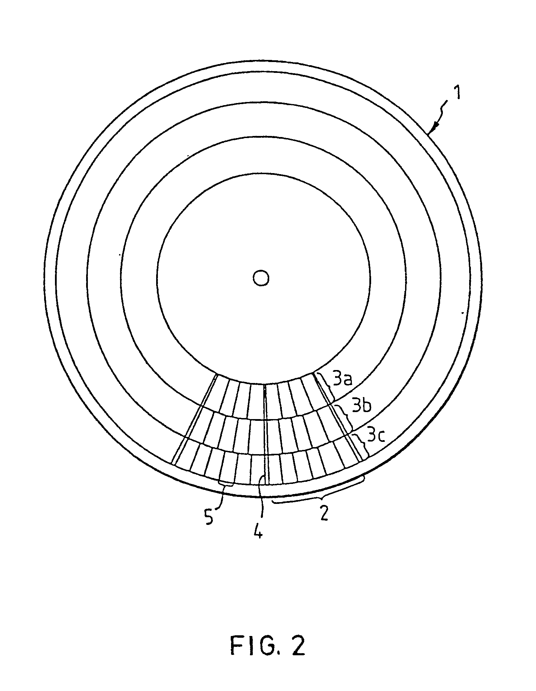

A second embodiment of the invention is shown in Fig. 2 wherein themagnetic disk employs a 3 zone recording system. This drawing is the same as Fig. 1 except that zone 3c (zone 2) is added.

In the case of 3 zones ( 4 : 5 : 6 division ), the integral N is equal to 4 which gives an internal management unit of 512 / 4 = 128 bytes. Each sector in zone 0 compriess 4 units (512 bytes), each sector in zone 1 comprises 5 units (640 bytes) and eash sector in zone 2 comprises 6 units (768 bytes). As with the two zone method described above, the three zone system gives a 2.5 % total increase in storage capacity across the disk.

In both embodiments, the minimum unit which may be written to or read from the disk surface is equal to the user management unit, 512 bytes. This corresponds to an integral number of internal management units. Taking the disk of Fig. 1 as an example, the minimum amount of data that can be transferred to or from the disk is equal to two units (512 bytes).

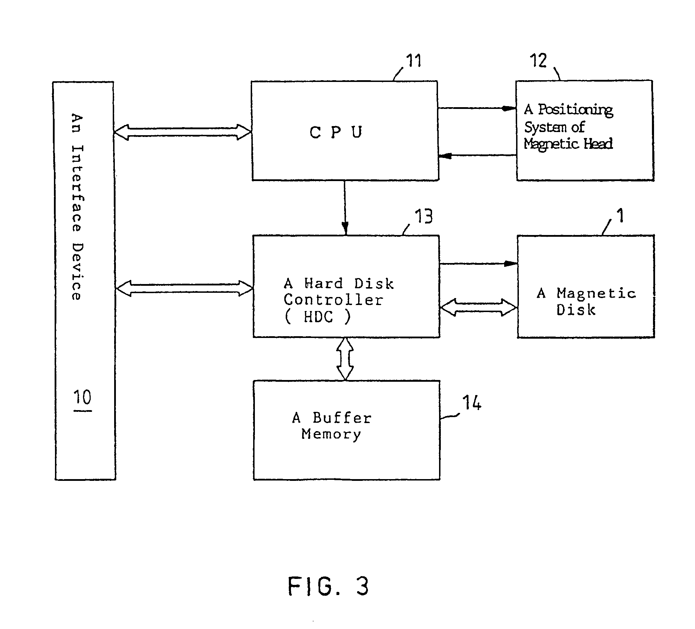

Next, the method of reading data from the disk will be explained with reference to Fig. 3. In the figure, a interface device 10 is connected to the CPU 11 and Hard Disk Controller (HDC) 13 by means of a data bus. CPU 11 is functionally connected to the head positioning system 12, and also to HDC 13. HDC 13 sends out control signals to the magnetic disk 1, and data is transferred beween the HDC and the disk over data bus. HDC 13 is also connected to a buffer memory 14 via a data bus.

During read/write operations, read/write commands are sent out from a host system which is connected to the disk drive via the interface device 10. Firstly, the command, a header address, and the required number of sectors are sent via the interface device over the data bus to CPU 11. CPU 11 determines whether the received command is a read/ write command or some other type of command. For example, if it is a read command, the CPU 11 calculates the information necessary to position the head on the magnetic disk 1 (cylinder number, head number, sector number ) using the header address (header sector number). The head positioning system 12 uses the information calculated by the CPU to position the head on the correct track on tine magnetic disk. After performing the head positioning, the head positioning system 12 sends out a positioning completion signal to CPU 11. When CPU 11 receives the completion signal, CPU 11 sends out the read command, a necessary header sector ID (magnetic disk management number), and a necessary sector number to the HDC 13. The HDC 13 sends a sector ID search signal to magnetic disk 1, searches the sector ID, and reads the required number of sectors from the disk. CPU 11 also calculates the number of internal management units to be read from the disk. Taking the Fig. 1 example, the required number of internal management units is equal to the number of user management units multiplied by two. With this calculated internal management unit number, HDC 13 performs the read operation, and stores data read from the magnetic disk 1 to the buffer memory 14. The data stored in buffer memory 14 is chained in internal management units, and becomes a series of chained data. When a predetermined amount of data is stored, the HDC 13 starts to transfer data to interface device 10 through the data bus. Data is transferred to the user according to the number of bytes of the sector set by the user.

Although the above explanation describes a read operation, a write operation is the same as regards the data division and chaining using the buffer memory, except of course that the transfer of data is in the opposite direction.

While the above description has been directed to two and three zone recording system, it will be appreciated that the present invention is also applicable in embodiments where the mumber of zones is greater than 3.

## Claims

1. A magnetic disk apparatus including at least one data recording disk (1), the recording surface of which is divided into:

   a plurality of concentric zones (3a,3b) including an innermost and an outermost zone, each zone comprising a plurality of data tracks;

a plurality of fields (4) containing servo information for use in positioning a head of the apparatus over the tracks, the fields extending contiguously across said zones and defining a data recording sector (2) in each track between circumferentially adjacent fields;

each sector comprising a plurality of blocks (5), each of which contains a predetermined amount of data, and the number of blocks per sector being fixed within a zone and increasing from said innermost to said outermost zone.

2. Apparatus as claimed in claim 1, wherein there are an integral number of blocks per sector in each zone.

3. Apparatus as claimed in claim 1 or claim 2, wherein there are two zones, and the ratio of the number of blocks sector in the innermost zone to the number of blocks per sector in the outermost zone is 2 : 3.

4. Apparatus as claimed in claim 2, wherein there are three zones, andzones, and the ratio of the number of blocks per sector in the innermost zone tothe number of blocks per sector in an intermediate zone to the number of blocks per sector in the outermost zone is 4 : 5 : 6.

FIG. 1

FIG. 2

FIG. 3